(19) 

Europäisches
Patentamt
European
Patent Office
Office européen
des brevets

(11) **EP 2 192 670 A1**

(12) **EUROPÄISCHE PATENTANMELDUNG**

(43) Veröffentlichungstag:
**02.06.2010 Patentblatt 2010/22**

(51) Int Cl.:
*H02K 3/28* (2006.01)       *H02K 29/03* (2006.01)
*H02K 1/27* (2006.01)       *H02K 21/16* (2006.01)

(21) Anmeldenummer: **08020838.2**

(22) Anmeldetag: **01.12.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(71) Anmelder: **Siemens Aktiengesellschaft
80333 München (DE)**

(72) Erfinder:
• **Grossmann, Udo
97640 Oberstreu (DE)**
• **Schunk, Holger
97461 Lendershausen (DE)**
• **Vollmer, Rolf
36129 Gersfeld (DE)**
• **Zastrow, Michael
97616 Salz (DE)**

(54) **Permanenterregte Synchronmaschine mit 10 Polen, 12 Nuten und optimierter Läufergeometrie**

(57)    Die Erfindung betrifft eine dreiphasige dynamoelektrische permanenterregte Synchronmaschine (1) mit einem Stator (2) mit zu einem Rotor (12) weisenden Zähnen (5), wobei zwischen den Zähnen (5) zwölf Nuten (3) ausgebildet sind, die Spulenseiten von Spulen eines Wicklungssystems aufweisen, derart, dass sich in jeder Nut (3) zwei Spulenseiten unterschiedlicher Spulen befinden, wobei der Rotor (12) eine zylinderförmige Trägerstruktur (13) aufweist und diese mit Permanentmagneten (11) versehen ist, deren Innenradius dem Radius der Trägerstruktur (13) entspricht und wobei der Außenradius der Permanentmagnete (11) kleiner als deren Innenradius ist und wobei die Permanentmagnete (11) in Umfangsrichtung betrachtet zehn Magnetpole ausbilden.

## FIG 6

EP 2 192 670 A1

**Beschreibung**

Die Erfindung betrifft eine dreiphasige dynamoelektrische permanenterregte Synchronmaschine mit einem Stator mit zu einem Rotor weisenden Zähnen, wobei der Rotor Permanentmagnete aufweist.

Dynamoelektrische Synchronmaschinen, die mit Permanentmagneten, insbesondere konstanter Dikke erregt werden, weisen idealisiert ein rechteckförmiges Erregerfeld auf. Die in dem Rechteckfeld enthaltenen Oberwellen führen nun mit den Oberwellen, die aus der bestromten Motorwicklung und der Nutung des Stators resultieren, zu Pendel- und Rastmomenten zwischen Rotor und Stator. Dies beeinflusst u.a. die Drehmomentwelligkeit und damit die Bearbeitungsgüte beispielsweise der von Werkzeugmaschinen bearbeiteten Werkstücken.

Um diese negativen Begleiterscheinungen zu reduzieren, ist es beispielsweise aus der US-Schrift 7 425 785 B2 bekannt, die Oberfläche des Permanentmagneten so zu gestalten, dass ein mit Abstrichen sinusförmiges Luftspaltfeld entsteht. Die nach innen weisende Unterkante des Permanentmagneten ist dabei gerade bzw. eben ausgeführt. Dieser Rotor hat demnach eine polygonzugförmige Kontur, auf der sich die Permanentmagnete befinden.

Aus fertigungstechnischen Gründen können aber dabei die Permanentmagnete an ihren umfangsseitigen Randbereichen nicht beliebig dünn geformt werden, da sonst Bruchgefahr der Permanentmagnete besteht und dies außerdem zu erhöhten Kosten bei der Herstellung der Permanentmagnete führt. Deshalb werden diese Permanentmagnete in ihren Randbereichen bereits "abgeschnitten" ausgeführt. So entsteht die sogenannte "Brotlaibform", d.h. eine ebene Grundfläche mit einer gewölbten, dem Luftspalt der elektrischen Maschine zugewandten Oberfläche des Permanentmagneten.

Durch diese Maßnahme verbleiben letztlich immer noch Oberwellen im Luftspaltfeld, die weiterhin für Rast- und Pendelmomente verantwortlich sind.

Eine weitere Lösung um diese Pendel- und Rastmomente zu vermeiden, ist die Staffelung oder Schrägung der Permanentmagnete auf dem Rotor. Damit werden vorbestimmte Rastmomente reduziert. Aufgrund von Toleranzen der Fertigungsmittel können die angestrebten Schrägungswinkel jedoch nicht exakt eingehalten werden, so dass weiterhin Rast- und Pendelmomente verbleiben.

Eine Reduzierung der Drehmomentwelligkeit wird durch die in DE 100 41 329 A1 beschrieben Ausführung erreicht, wobei dabei über eine Polbedeckung der Oberfläche des Läufers mit Permanentmagneten von 70 bis 80% ein verbessertes Oberwellenverhalten angestrebt wird.

Weiterhin ist der DE 199 61 760 A1 zu entnehmen, dass spezielle Wicklungsfaktoren eines in den Nuten angeordneten Wicklungssystems einer dynamoelektrischen Maschine und eine eventuelle Schrägung der Nuten zu einer Reduzierung der Drehmomentwelligkeit führen.

Auch durch die Gestaltung der Permanentmagnete, beispielsweise nach der JP 2003230240 oder der EP 0 445 308 A1 wird eine Reduzierung des Drehmomentwelligkeit als auch von Rast- und Pendelmomenten angestrebt.

Ausgehend davon liegt der Erfindung die Aufgabe zugrunde, eine dreiphasige dynamoelektrische permanenterregte Synchronmaschine zu schaffen, bei der die Rast- und Pendelmomente vermieden oder zumindest gegenüber dem Stand der Technik stark reduziert sind.

Des Weiteren soll gegenüber dem Stand der Technik die Drehmomentenwelligkeit reduziert werden.

Die Lösung der gestellten Aufgabe gelingt durch eine dreiphasige dynamoelektrische permanenterregte Synchronmaschine mit einem Stator mit zu einem Rotor weisenden Zähnen, wobei zwischen den Zähnen zwölf Nuten ausgebildet sind, die Spulenseiten von Spulen eines Wicklungssystems aufweisen, derart, dass sich in jeder Nut zwei Spulenseiten unterschiedlicher Spulen befinden, wobei der Rotor eine zylinderförmige Trägerstruktur aufweist und diese mit Permanentmagneten versehen ist, deren Innenradius dem Radius der Trägerstruktur entspricht und wobei der Außenradius der Permanentmagnete kleiner als deren Innenradius ist und wobei die Permanentmagnete in Umfangsrichtung betrachtet zehn Magnetpole ausbilden.

Durch die erfindungsgemäße Gestaltung insbesondere des Rotors, werden nunmehr, auch bei einem klassischen Wicklungssystem die Oberwellen im Stator stark reduziert, so dass die Rast- und Pendelmomente nur noch in geringem Maße auftreten. Ein klassisches Wicklungssystem beinhaltet dabei gesehnte Spulen, wobei zwischen Hin- und Rückleiter einer Spule sich zumindest eine von dieser Spule unbelegte Nut des Stators befindet.

Zahnspulen im Stator verursachen weit höhere Oberwellen im Luftspaltfeld als klassische Wicklungssysteme, so dass bei gleichzeitiger Vereinfachung der Herstellung des Stators auf dem Rotor verstärkt Maßnahmen ergriffen werden müssen, um diese negativen Auswirkungen zu vermeiden oder zumindest zu reduzieren. Insbesondere ist dabei das Verhältnis eines zwölfnutigen Stators, mit einem zehnpoligen Rotor äußerst vorteilhaft. Da deren kleinstes gemeinsames Vielfaches weit über anderen "Nut-Magnetpol"-Varianten liegt und somit bereits durch diese Gestaltung zu einer Verringerung der Rast- und Pendelmomente beiträgt.

Die den zehnpoligen Rotor bildenden Permanentmagnete, die auf einer Trägerstruktur angeordnet sind, weisen an Grund- und Oberfläche verschiedene Radien auf, um sich direkt an der zylindrischen Oberfläche der Trägerstruktur anzulegen. Damit werden zusätzliche Luftspalte zwischen Trägerstruktur und Permanentmagnet vermieden. D.h., der Radius der Grundfläche des Permanentmagneten entspricht dem Radius der Zylindermantelfläche der Trägerstruktur. Damit können in einfacher Art und Weise auswählbare Staffelwinkel eingestellt werden ohne die Struktur des Rotors jeweils anzupassen.

Diese Trägerstruktur ist vorteilhafterweise so ausgebildet, dass eine magnetische Leitfähigkeit vorliegt. Bei hohen Drehzahlen über 10000 U/min ist es vorteilhaft wenn eine Unterdrückung der Wirbelströme vorgesehen ist, die Trägerstruktur insbesondere als Blechpaket ausgebildet ist.

Die Trägerstruktur kann aber auch aus gesintertem Material oder aus verwindungssteifem Kunststoff oder aus einer auf dieser Kunststoffstruktur angeordneten magnetisch leitfähigen Hülse bestehen.

Die Oberfläche des Permanentmagneten, also die Fläche, die dem Luftspalt der dynamoelektrischen Maschine zugewandt ist, weist einen Radius auf, der kleiner ist als der Radius der Grundfläche des Permanentmagneten.

Vorteilhafte Reduzierung der Pegel der Oberwellen stellen sich insbesondere dann ein, wenn der Außenradius eines Permanentmagneten dem 0,5 bis 0,9-fachen des Innenradius des Permanentmagenten entspricht.

Für den Abstand der beiden Radien ist es vorteilhaft, wenn dieser im Bereich zwischen dem 0,6 und dem 0,2-fachen des Innenradius entspricht.

Durch diese Maßnahmen lässt sich eine Randabsenkung der Permanentmagnete erzielen, die zu einer wesentlichen Reduzierung der Rast- und Pendelmomente beiträgt.

Durch die zylindrische Ausgestaltung der Trägerstruktur sind auch derartige Permanentmagnete, die mit dem identischen Radius ihrer Grundfläche ausgestattet sind wie der Außenradius der Trägerstruktur über die axiale Länge des Rotors beliebig staffelbar. Durch die vorgebbare Staffelung können gezielt Oberwellen, insbesondere die fünfte und/oder siebte ausgeblendet bzw. reduziert werden.

Trägerstrukturformen im Stand der Technik, die eine Polygonstruktur aufweisen, lassen eine derartige Staffelung nicht zu, da die Polygonstruktur der Läuferbleche mit gestaffelt werden muss

Um die Auswirkungen der Oberwellen weiter zu reduzieren, sind die axial verlaufenden Seitenflächen der Permanentmagnete parallel ausgeführt und weisen zu den virtuellen Schnittpunkten von Außen- und Innenradius einen vorgebbaren Abstand auf. Dieser Abstand wird u.a. bestimmt durch das Magnetmaterial und durch die angestrebte Reduzierung der Oberwellen.

In einer vorteilhaften Ausgestaltung weisen diese Permanentmagnete eine antiparallele Vorzugsrichtung der Feldlinien auf. Vorteilhafterweise sind dabei diese Permanentmagnete radial bzw. quasi-radial magnetisiert, so dass die Vorzugsrichtung ihrer Feldlinien nicht parallel verläuft, und damit in der virtuellen Verlängerung dieser Feldlinien einen Schnittpunkt aufweist.

Die Erfindung sowie weitere vorteilhafte Ausgestaltungen der Erfindung sind den beispielhaft dargestellten Ausführungsbeispielen zu entnehmen. Darin zeigen:

FIG 1    bis 3 Schaltungsvarianten der Zahnspulen des Stators,

FIG 4    eine Längssicht eines Rotors,

FIG 5    eine Seitenansicht eines Rotors,

FIG 6    eine prinzipielle Anordnung eines Permanentmagneten auf einer Trägerstruktur,

FIG 7    einen Querschnitt einer permanenterregten Synchronmaschine,

FIG 8    eine Seitenansicht eines Rotors,

FIG 9    eine prinzipielle Darstellung eines Permanentmagneten,

FIG 10,11    Anordnungen von Zahnspulen,

FIG 12    Darstellung unterschiedlicher Staffelwinkel.

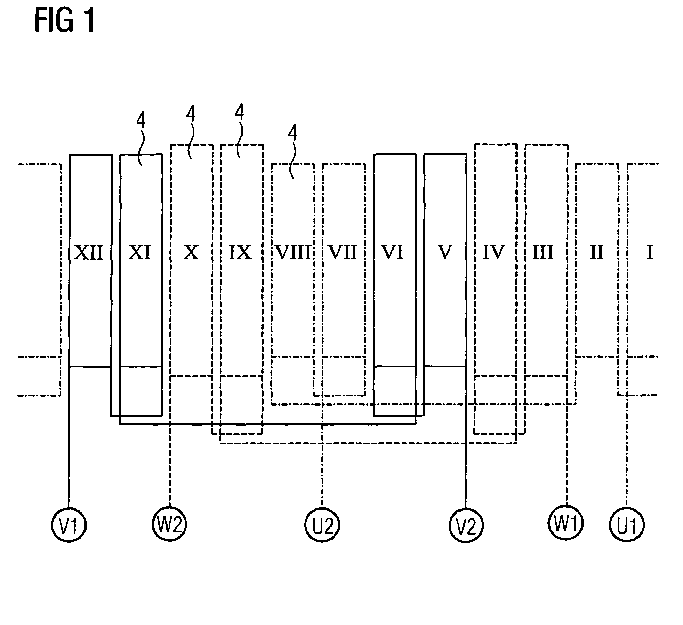

FIG 1 bis 3 zeigt jeweils einen Schaltungsplan eines dreiphasigen U, V, W Stators 2 einer permanenterregten Synchronmaschine 1 mit zwölf Nuten 3, der mit einem Wicklungssystem versehen ist, das im vorliegenden Ausführungsbeispiel Zahnspulen 4 aufweist. Jede Zahnspule 4 umfasst einen Zahn 5 des Stators 2 derart, dass sich in einer Nut 3 zwei Spulenseiten unterschiedlicher Zahnspulen 4 befinden. Die zu diesen Spulenseiten einer Nut 3 gehörenden Zahnspulen 4 sind einer Phase oder unterschiedlichen Phasen zugeordnet.

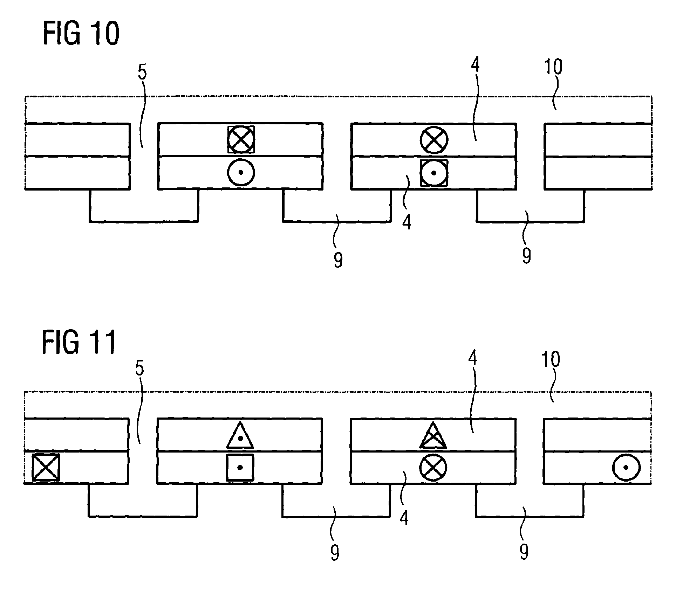

Diese Spulenseiten sind nebeneinander angeordnet, sie können ebenso übereinander und/oder versetzt angeordnet sein, wie dies den FIG 10, 11 prinzipiell zu entnehmen ist. Dabei sind beispielsweise Hin- und Rückleiter in den Nuten 3 unterschiedlich positioniert. Einmal am Nutgrund 6 und einmal am Nutschlitz 7. Der Stator 2 weist eine dreiphasige Zahnspulenwicklung mit je vier Zahnspulen 4 auf. Dabei sind die Zahnspulen 4 einer Phase in Reihe und/oder parallel geschaltet. Das Bestreben ist dabei den Schaltungsaufwand zum Verschalten der Zahnspulen 4 einer Phase zu minimieren. Bei einer Verschaltung nach FIG 1 sind die Zahnspulen 4 der Phase V um die Zähne V, VI, XI und XII gelegt. Die Zahnspulen 4 der Phase U sind dabei um die Zähne VII, VIII, I und II gelegt und die Zahnpulsen 4 der Phase W um die Zähne III, IV, IX und X.

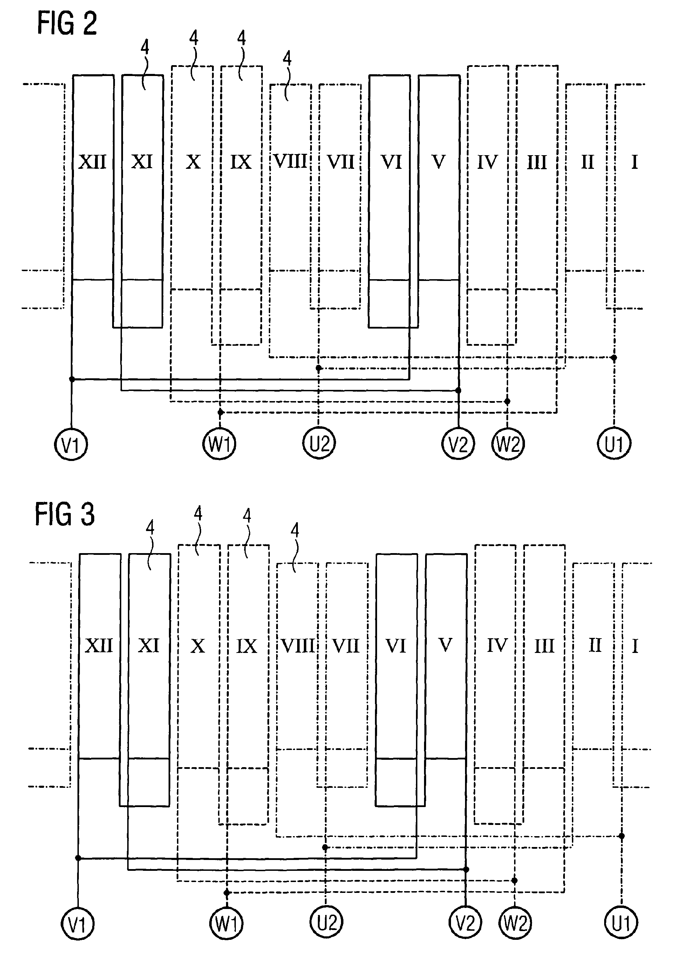

Die Wicklungsschemata der Figuren 2 und 3 entsprechen im Wesentlichen dem der FIG 1. Der Unterschied besteht darin, in welcher Reihenfolge die Zahnspulen 4 der jeweiligen Phasen vom Strom durchsetzt werden. Grundsätzlich wird bei einer derartigen Schaltungsanordnung der Verschaltungsaufwand minimiert bei gleichzeitiger Maximierung des Strombelags, was letztlich wieder eine Frage des Kupferfüllfaktors in der Nut 3 ist.

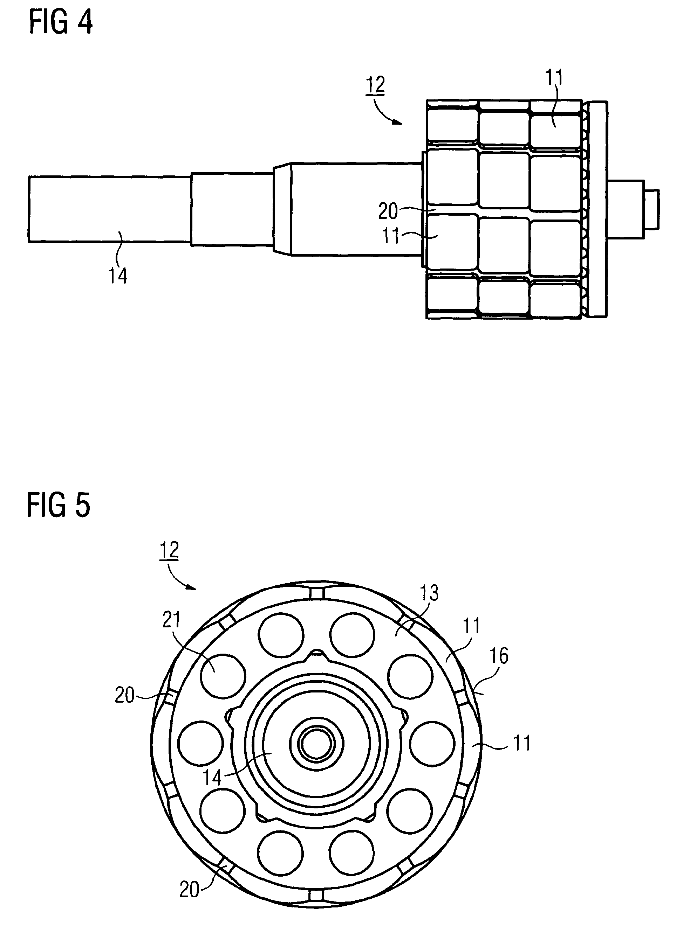

FIG 4 zeigt eine Staffelung von Permanentmagneten 11 eines Rotors 12, bei dem Permanentmagnete 11 auf einer zylindrischen Trägerstruktur 13 aufgebracht sind, die durch elektromagnetische Wechselwirkung mit dem Wicklungssystem des Stators 2 eine Welle 14 in Rotation versetzt. Im vorliegenden Ausführungsbeispiel ist der Rotor 12 in axialer Länge $l_G$ mit drei Permanentmagneten 11 pro Magnetpol bestückt, wobei die Permanentmagnete 11 jeweils einen Versatz bezogen auf den vorhergehenden Permanentmagneten 11 um einen vorgebbaren Winkel, vorzugsweise von ca. 2 Grad aufweisen, so dass sich über die gesamte axiale Länge des Rotors 12 betrachtet eine gleichbleibende Staffelung der Permanentmagnete 11 einstellt. Damit wird eine vorgebbare Unterdrückung vorgebbarer Oberwellen, beispielsweise der fünften und siebten erreicht. Zwischen den Magnetpolen ist jeweils eine Pollücke 20.

FIG 5 zeigt in einer Querschnittsdarstellung den Rotor 12 mit seiner Trägerstruktur 13 und mit an dessen Oberfläche angeordneten Permanentmagneten 11, die einen zehnpoligen Rotor 12 ausbilden. Die Trägerstruktur 13 weist Ausnehmungen 21 auf, die u.a. die Trägheit des Rotors 12 reduzieren. Die Permanentmagnete 11 sind, wie später noch ausgeführt, direkt an der zylindrischen Oberfläche der Trägerstruktur 13 positioniert, beispielsweise geklebt, wobei der Innenradius RMagI der Grundfläche 15 des Permanentmagneten 11 gleich dem Radius der Trägerstruktur 13 ist. Um die Permanentmagnete 11 auch im Betrieb an ihren Positionen zu halten, ist insbesondere eine Bandage 16 vorgesehen, die die Permanentmagnete 11 ortsfest fixiert.

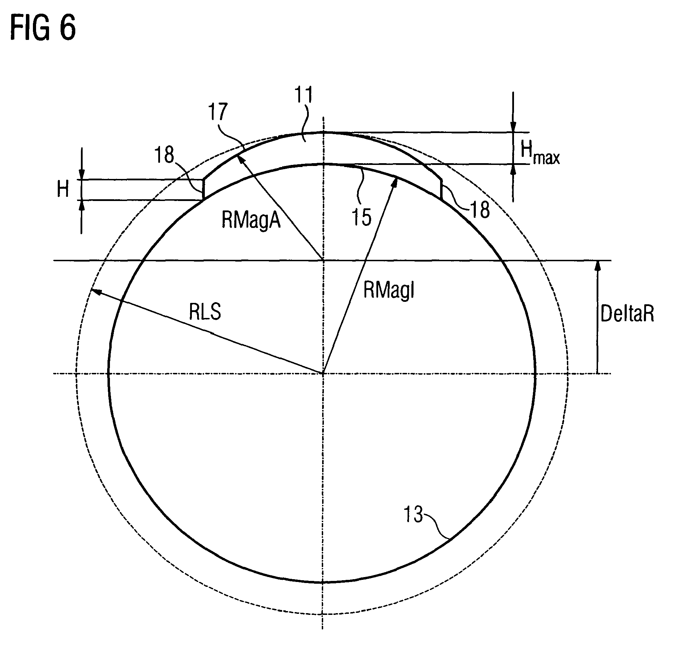

FIG 6 zeigt in prinzipieller Darstellung die geometrischen Abmessungen eines Permanentmagneten 11 mit seiner Grundfläche 15 und mit seiner Oberfläche 17 und den jeweiligen Radien. Dabei entspricht der Innenradius RMagI der Grundfläche 15 des Permanentmagneten 11 dem Außenradius der Trägerstruktur 13. Der Außenradius RMagA der Oberfläche 17 des Permanentmagneten 11 ist kleiner als der Innenradius RMagI der Grundfläche 15 des Permanentmagneten 11; vorzugsweise liegt dieser im Bereich von 0,5 bis 0,9 des Innenradius RMagI der Grundfläche 15 des Permanentmagneten 11.

Der Unterschied der oben genannten Radien DeltaR liegt vorzugsweise im Intervall von 0,6 RMagI bis 0,2 RMagI

Durch diese ausgebildete Randabsenkung des Permanentmagneten 11 in Richtung seiner Polränder wird das Luftspaltfeld weiter einem Sinus angenähert. Zusammen mit der zwölf-nutigen Ausgestaltung des Stators 2 sind nunmehr im Nulldurchgang des sinusförmigen Verlaufs nahezu keine abrupten Änderungen des Feldes festzustellen. Dadurch werden auch die Verluste im Blechpaket 8 des Stators 2 reduziert.

Die Seitenflächen 18 der Permanentmagnete 11 sind, um die Wirksamkeit der Reduktion der Pendel- und Rastmomente weiter zu erhöhen, parallel zueinander ausgeführt und weisen aus fertigungstechnischen Gründen eine Höhe H auf, die letztlich wesentlich geringer ist als die maximale Höhe Hmax des Permanentmagneten 11, vorzugsweise in seiner geometrischen Mitte.

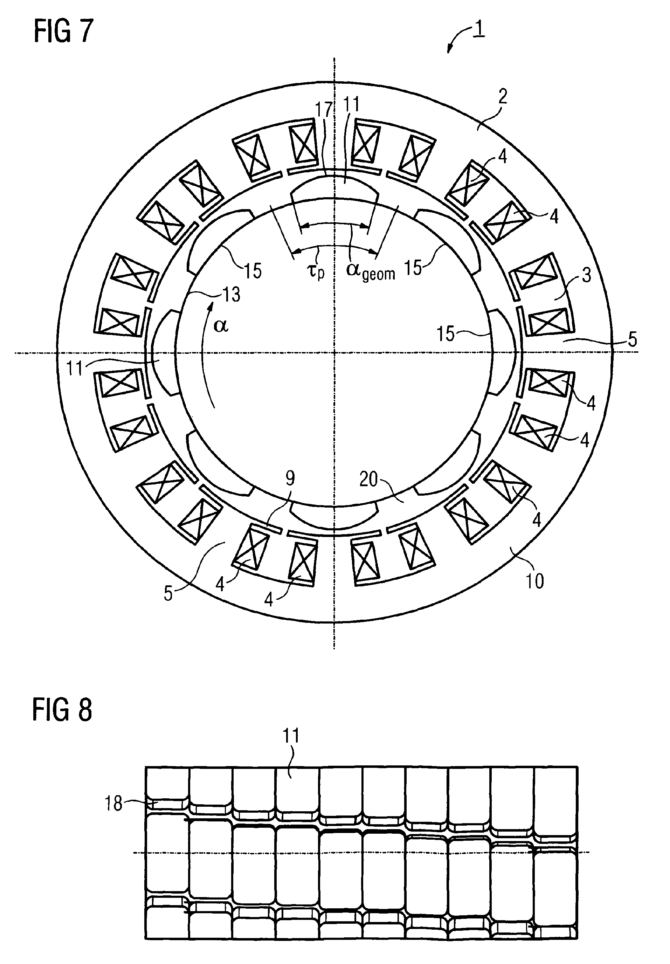

Die Seitenflächen 18 können aber auch bezüglich des Wellenmittelpunktes 28 radial ausgeführt sein, wie dies beispielsweise der FIG 7 zu entnehmen ist.

Damit ergibt sich ein Radius RLS des Rotors 12, der ggf. durch die Dicke einer Bandage 16 vergrößert wird.

Vorteilhafterweise sind die Permanentmagnete 11 radial magnetisiert, so dass bei einer virtuellen Verlängerung der im Permanentmagneten 11 verlaufenden Feldlinien, sich diese unterhalb des Mittelpunkts 28 des Rotors 12 in einem virtuellen Punkt 23 schneiden würden. Die Feldlinien verlaufen also nicht grundsätzlich immer senkrecht aus Oberfläche 17, insbesondere am Rand der Permanentmagneten 11 sind diese Feldlinien in Richtung Mitte des Permanentmagneten 11 geneigt. Dadurch erhöht sich die Entmagnetisierungssicherheit, so dass eine Langlebigkeit des Antriebs bei gleichen Nenndaten, insbesondere dem Nennmoment gewährleistet ist.

FIG 7 zeigt einen Querschnitt einer permanenterregten Synchronmaschine 1 mit einem Rotor 12, dessen Permanentmagnete 11 erfindungsgemäß ausgebildet sind. In jeder Nut 3 befinden sich zwei Spulenseiten zweier unterschiedlicher Zahnspulen 4, die in Umfangsrichtung $\alpha$ nebeneinander angeordnet sind. Das Blechpaket 8 des Stators 2 ist dabei aus einem axial zusammensteckbaren Stern-Jochpaket, d.h. losen oder in Umfangsrichtung an den Zahnköpfen 9 zusammenhängenden Zähnen 5, die in einen Jochrücken 10 eingesetzt werden oder einteiligen Blechen oder losen zusammensetzbaren Zähnen aufgebaut, wobei die Zahnköpfe 9 über einen Formschluss mit dem Zahnschaft verbunden werden.

FIG 8 zeigt einen Rotor 12, wobei dessen Magnetpole aus mehreren Permanentmagneten 11 bestehen, die zu ihrem jeweils vorhergehenden Permanentmagneten 11 keinen oder einen vorgebbaren Staffelwinkel aufweisen. Aufgrund der zylindrischen Oberfläche der Trägerstruktur 13 lässt sich dies vergleichsweise einfach einstellen.

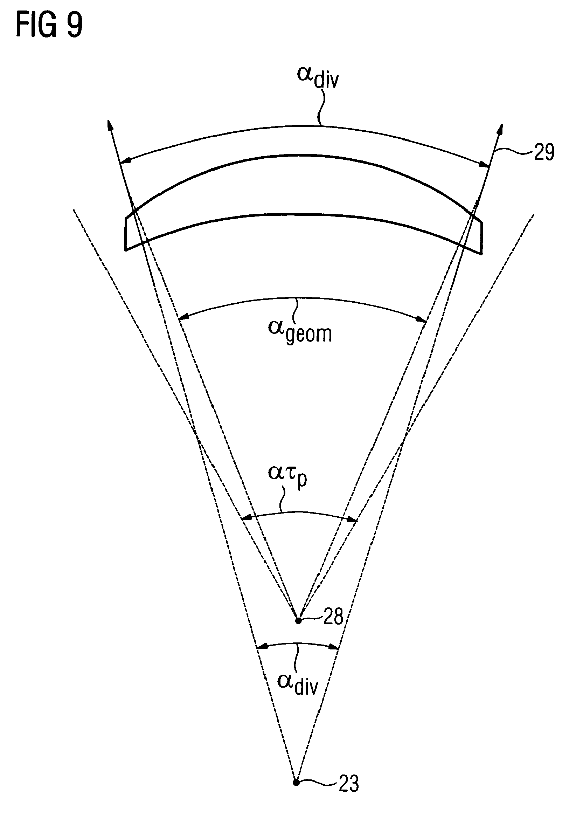

FIG 9 zeigt in einer weiteren Darstellung einen Permanentmagneten 11 dessen magnetische Anisotropie nicht parallel sondern quasi-radial ausgeführt ist. Bei einer Polteilung von $\alpha\tau_p$ entspricht die Ausrichtung 29 der magnetischen Vorzugsrichtung der Feldlinien $\alpha_{div}$ zwischen dem linken und dem rechten Rand des Permanentmagneten 11, also im Bereich von $\alpha_{geom}$:

$$\alpha_{div} \approx 0,5 \ \alpha_{geom}$$

Damit liegt ein Schnittpunkt dieser Feldlinien auf der diesem Permanentmagneten 11 abgewandten Seite des Rotors 12.

FIG 10 und 11 zeigen verschiedene Anordnungen von Zahnspulen 4 in den Nuten 3, wobei Spulenseiten (Hin- und Rückleiter, also Kreuz und Punkt) gleicher Zahnspulen 4 mit den gleichen geometrischen Bezeichnungen versehen sind, also Kreis, Dreieck und Viereck.

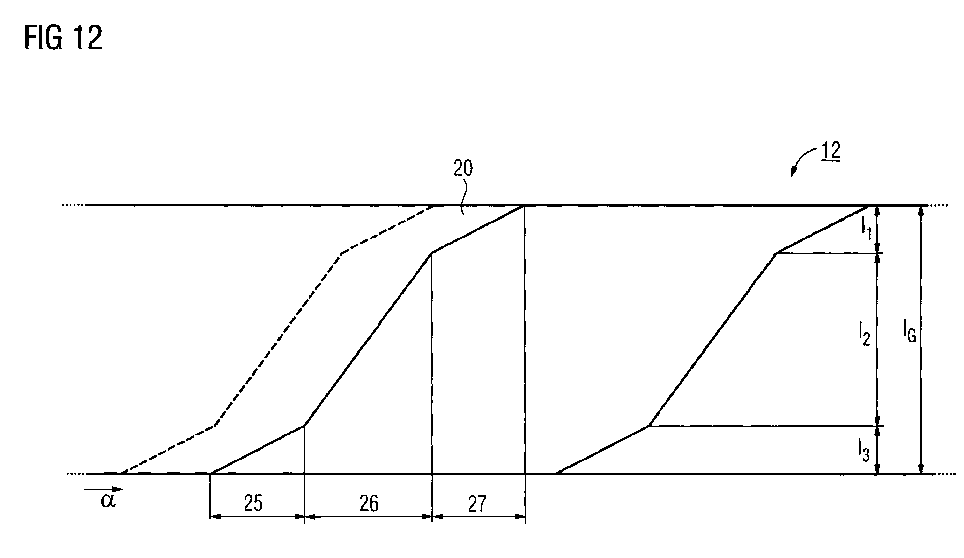

FIG 12 zeigt in einer prinzipiellen Darstellung die axiale Länge $l_G$ des Rotors 12, der unterschiedliche axiale Abschnitte $l_1$, $l_2$, $l_3$ unterteilt ist. Jeder axiale Abschnitt weist unterschiedliche Staffelwinkel auf, wie dies den Abschnitten 25, 26, 27 in Umfangsrichtung $\alpha$ zu entnehmen ist.

**Patentansprüche**

1. Dreiphasige dynamoelektrische permanenterregte Synchronmaschine (1) mit einem Stator (2) mit zu einem Rotor (12) weisenden Zähnen (5), wobei zwischen den Zähnen (5) zwölf Nuten (3) ausgebildet sind, die Spulenseiten von Spulen eines Wicklungssystems aufweisen, derart, dass sich in jeder Nut (3) zwei Spulenseiten unterschiedlicher Spulen befinden, wobei der Rotor (12) eine zylinderförmige Trägerstruktur (13) aufweist und diese mit Permanentmagneten (11) versehen ist, deren Innenradius (RMagI) dem Radius der Trägerstruktur (13) entspricht und wobei der Außenradius (RMagA) der Permanentmagnete (11) kleiner als deren Innenradius (RMagI) ist und wobei die Permanentmagnete (11) in Umfangsrichtung betrachtet zehn Magnetpole ausbilden.

2. Dreiphasige dynamoelektrische permanenterregte Synchronmaschine (1) nach Anspruch 1, **dadurch gekennzeichnet, dass** das Wicklungssystem Zahnspulen (4) aufweist, wobei sich in jeder Nut (3) Spulenseiten unterschiedlicher Zahnspulen (4) befinden.

3. Dreiphasige dynamoelektrische permanenterregte Synchronmaschine (1) nach einem der vorhergehenden Ansprüche, **dadurch gekennzeichnet, dass** die Permanentmagnete (11) eine radiale oder quasiradiale magnetische Anisotropie, also radiale oder quasi-radiale Ausrichtung ihrer Feldlinien aufweisen.

4. Dreiphasige dynamoelektrische permanenterregte Synchronmaschine (1) nach Anspruch 1 oder 2, **dadurch gekennzeichnet, dass** der Außenradius (RMagA) der Permanentmagnete (11) sich in dem Intervall zwischen dem 0,9-fachen und 0,5-fachen des Innenradius (RMagI) des Permanentmagneten (11) befindet.

5. Dreiphasige dynamoelektrische permanenterregte Synchronmaschine (1) nach einem der vorhergehenden Ansprüche, **dadurch gekennzeichnet, dass** die Mittelpunkte der Radien von Außenradius (RMagA) und Innenradius (RMagI) des Permanentmagneten (11) einen Abstand aufweisen, der im Bereich des 0,2- bis 0,6-fachen des Innenradius (RMagI) des Permanentmagneten (11) liegt.

6. Dreiphasige dynamoelektrische permanenterregte Synchronmaschine (1) nach einem der vorhergehenden Ansprüche, **dadurch gekennzeichnet, dass** der Rotor (12) über seine axiale Länge betrachtet, vorgebbare unterschiedliche Staffelwinkel der Permanentmagnete (11) aufweist.

7. Dreiphasige dynamoelektrische permanenterregte Synchronmaschine (1) nach Anspruch 5, **dadurch gekennzeichnet, dass** der Rotor (12) axiale Abschnitte mit unterschiedlichen Staffelwinkeln aufweist.

8. Dreiphasige dynamoelektrische permanenterregte Synchronmaschine (1) nach einem der vorhergehenden Ansprüche, **dadurch gekennzeichnet, dass** an den Randbereichen der Permanentmagnete (11) in Umfangsrichtung betrachtet eine Höhe (H) vorgesehen ist, die vom Schnittpunkt der beiden Radien des Permanentmagneten (11) einen vorgebbaren Abstand aufweist, wobei die im Wesentlichen axialen verlaufenden Seitenflächen (18) parallel zueinander ausgeführt sind.

9. Dreiphasige dynamoelektrische permanenterregte Synchronmaschine (1) nach Anspruch 8, **dadurch gekennzeichnet, dass** die radiale Anisotropie der Permanentmagnete derart ausgerichtet ist, dass eine virtuelle Verlängerung des im Permanentmagneten (11) bestehenden Feldlinienverlauf (29) einen Schnittpunkt (23) auf der dem jeweiligen Permanentmagneten (11) abgewandten Seite des Mittelpunkt (28) des Rotors (12) führt.

## FIG 1

## FIG 2

## FIG 3

# FIG 4

# FIG 5

FIG 6

## FIG 7

## FIG 8

# FIG 9

FIG 10

FIG 11

FIG 12

Europäisches
Patentamt

European
Patent Office

Office européen
des brevets

**EUROPÄISCHER RECHERCHENBERICHT**

**Nummer der Anmeldung**

EP 08 02 0838

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | DE 199 61 760 A1 (SIEMENS AG [DE]) 5. Juli 2001 (2001-07-05) * das ganze Dokument * ----- | 1-4,6,7 | INV. H02K3/28 H02K29/03 H02K1/27 |
| Y | JP 2000 350393 A (SHINETSU CHEMICAL CO) 15. Dezember 2000 (2000-12-15) * Zusammenfassung; Abbildungen 4,5 * ----- | 1-4,6,7 | ADD. H02K21/16 |
| Y | DE 10 2004 045940 B3 (SIEMENS AG [DE]) 4. Mai 2006 (2006-05-04) * Seite 2, Absätze 2,5,9 - Seite 3, Absatz 14 * * Seite 3, Absatz 18 * * Seite 4, Absatz 31 - Seite 5, Absatz 39; Abbildung 2 * ----- | 1-5,8,9 | |
| Y | JP 02 142333 A (TOKYO ELECTRIC CO LTD) 31. Mai 1990 (1990-05-31) * Zusammenfassung; Abbildungen 1-3,5,7 * ----- | 1-5,8,9 | |
| A | US 2006/017343 A1 (OHATA KATSUMI [JP] ET AL) 26. Januar 2006 (2006-01-26) * das ganze Dokument * ----- | 3,9 | **RECHERCHIERTE SACHGEBIETE (IPC)** H02K |

Der vorliegende Recherchenbericht wurde für alle Patentansprüche erstellt

| Recherchenort | Abschlußdatum der Recherche | Prüfer |
|---|---|---|
| München | 15. Juli 2009 | von Rauch, Marianne |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 02 0838

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-07-2009

| Im Recherchenbericht angeführtes Patentdokument | Datum der Veröffentlichung | Mitglied(er) der Patentfamilie | Datum der Veröffentlichung |
|---|---|---|---|
| DE 19961760 A1 | 05-07-2001 | KEINE | |
| JP 2000350393 A | 15-12-2000 | KEINE | |
| DE 102004045940 B3 | 04-05-2006 | WO 2006032636 A1 | 30-03-2006 |
| JP 2142333 A | 31-05-1990 | KEINE | |
| US 2006017343 A1 | 26-01-2006 | CN 1725600 A<br>DE 102004060851 A1<br>FR 2873513 A1<br>JP 2006042414 A | 25-01-2006<br>16-03-2006<br>27-01-2006<br>09-02-2006 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7425785 B2
- DE 10041329 A1
- DE 19961760 A1
- JP 2003230240 B
- EP 0445308 A1